# EUROPÄISCHE PATENTANMELDUNG

(11) **EP 1 270 452 A1**
(43) Veröffentlichungstag der Anmeldung: **02.01.2003**
(21) Anmeldenummer: 02100527.7
(22) Anmeldetag: 21.05.2002
(51) Int. Cl.: B65G 1/04, B65G 65/00

(54) **Einrichtung zur Beladung und Entladung von Rollpaletten mit Ladehilfsmitteln und Rollpalette zur Verwendung in einer derartigen Einrichtung**

(30) Priorität: 20.06.2001 DE 10129790
(71) Anmelder: SIEMENS AKTIENGESELLSCHAFT, 80333 München (DE)
(72) Erfinder: Alesi, Peter, 90419, Nürnberg (DE); Schneider, Sascha, 90491, Nürnberg (DE)

(57) **Zusammenfassung**

Die Ladeeinrichtung in einer in einer Förderstrecke vorgesehenen Ladestation besitzt einen mit der Förderstrecke (1) fluchtenden, jedoch von dieser Förderstrecke getrennten Förderabschnitt (1a). Im Bereich dieses Förderabschnittes (1a) ist ein Auflagestempel (6) feststehend angeordnet derart, daß er eine Abstützung für eine Rollpalette auf einem bezüglich der Förderstrecke (1) niedrigerem Niveau bildet. Der Auflagestempel besitzt zusätzliche Zentriermittel für die Rollpalette (20) und für das jeweils zu ladende Ladehilfsmittel (30). Eine Hubvorrichtung dient zur Höhenverstellung der Fördermittel des Förderabschnittes zwischen dem Niveau der Förderstrecke und einem Absenkniveau, bei dem die Rollpalette auf der Abstützung des Auflagestempels zur Auflage gelangt.

Damit ist eine genaue Zentrierung eines Ladehilfsmittels bezüglich einer Rollpalette mit einfachen Mitteln möglich.

## Beschreibung

Die Erfindung betrifft eine Einrichtung zur Beladung und Entladung von Rollpaletten mit Ladehilfsmitteln mit einer in einer Förderstrecke vorgesehenen Ladestation. Außerdem betrifft die Erfindung eine für die Verwendung in einer derartigen Einrichtung geeignete Rollpalette.

Rollpaletten werden in Regallagern mit mehrfachtiefen Lagerkanälen verwendet, wo jeweils mehrere Rollpaletten über Kupplungen aneinanderhängend eingeschoben werden (DE 42 24 168 C2). Vielfach werden dabei die zu lagernden Güter zunächst auf unterschiedlichen Ladehilfsmitteln angeliefert und zusammen mit diesen Ladehilfsmitteln auf die Rollpalette gesetzt. Die Ladeeinheiten werden dabei entweder manuell ohne Hilfsmittel, wie beispielsweise Rollcontainer, oder mittels Handgabelhubwagen oder Elektrostaplern, wie Europaletten und Gitterboxen, auf die Rollpalette gesetzt. Als technisches Problem gilt dabei die Positioniergenauigkeit der bis zu 1000 kg schweren Ladeeinheiten auf der Rollpalette. Die Toleranzmaße in automatischen Lagern machen es notwendig, die Ladeeinheiten mit einer Genauigkeit von wenigen Zentimetern auf der Rollpalette zu positionieren. Bei der manuellen Aufgabe von Rollcontainern oder von Europaletten bzw. Gitterboxen mittels Handgabelhubwagen ist ein bodenebenes Aufschieben notwendig. Dazu müssen die Rollpaletten über eine befahrbare, glatte Oberfläche verfügen. Problem dabei ist es, einen Übergang von einem Hallenboden auf die bodenebene Oberfläche der Rollpaletten zu schaffen, der so geringe Spaltmaße hat, daß die Räder der Rollcontainer und Handgabelhubwagen nicht steckenbleiben.

Zudem wird die geschlossene Oberfläche der Rollpaletten durch zahlreiche Überrollungen mit den Rädern von Rollcontainern oder Handgabelhubwagen stark beansprucht. Außerdem besteht die Gefahr, daß bei der Manipulation der Lagereinheiten, etwa mittels Elektrostaplern, beispielsweise bei einem zu schnellen Absenken der Last, die Rollpaletten beschädigt werden.

Um diese Probleme zu umgehen, wurde bisher generell eine automatische Ladestation vorgesehen, wobei die Ladeeinheiten zunächst auf eine konventionelle Fördereinrichtung gestellt, dann zur Ladestation transportiert und vollautomatisch bezüglich der Rollpalette zentriert und auf diese aufgesetzt wurde. Eine solche vollautomatische Ladestation ist allerdings aufwendig und teuer.

Ziel der vorliegenden Erfindung ist es, eine Einrichtung zu schaffen, welche ein sicheres Laden und Zentrieren von Ladehilfsmitteln auf Rollpaletten auch bei manueller Aufgabe ohne Zwischenschaltung einer vollautomatischen Zentiervorrichtung ermöglicht. Dabei soll diese Einrichtung für Ladehilfsmittel unterschiedlicher Gestalt und unterschiedlicher Grundflächen einsetzbar sein. Sie soll außerdem sicherstellen, daß die Rollpaletten auch bei unvorsichtiger Manipulation der Ladeeinheiten vor Beschädigungen weitgehend gesichert werden.

Erfindungsgemäß wird dies mit einer Einrichtung zur Beladung und Entladung von Rollpaletten mit Ladehilfsmitteln in einer in einer Förderstrecke vorgesehenen Ladestation erreicht, die folgende Merkmale aufweist:
- einen mit der Förderstrecke fluchtenden, jedoch von ihr getrennten Förderabschnitt zur Aufnahme jeweils einer Rollpalette, mit Fördermitteln, die jeweils nur einen Teil der Rollpalette abstützen,
- einen im Bereich des Förderabschnittes feststehend angeordneten Auflagestempel, der eine Abstützung für die Rollpalette zwischen und/oder neben den Fördermitteln auf einem bezüglich der Förderstrecke niedrigeren Niveau bildet, bei welchem die Oberfläche der Rollpalette ein vorgegebenes Ladeniveau einnimmt, wobei der Auflagestempel zusätzlich Zentriermittel für die Rollpalette und für mindestens ein Ladehilfsmittel aufweist, und
- eine Hubvorrichtung zur Höhenverstellung der Fördermittel des Förderabschnittes zwischen dem Niveau der Förderstrecke und einem Absenkniveau, bei dem die Rollpalette auf
- der Abstützung des Auflagestempels zur Auflage gelangt.

Die erfindungsgemäße Ladeeinrichtung enthält also einen Förderabschnitt, der zusammen mit einer auf ihm liegenden Rollpalette abgesenkt werden kann, bis die Rollpalette in vorgegebenen, von den Fördermitteln freigehaltenen Bereichen auf einem Aufnahmestempel liegt. Bei der Absenkung auf den Aufnahmestempel wird sie bereits durch entsprechende Zentriermittel des Auflagestempels in eine vorgegebene Position gebracht, zu der die weiter an dem gleichen Auflagestempel vorgesehenen Zentriermittel für das Ladehilfsmittel ebenfalls zentrisch angeordnet sind. Beim Aufsetzen des Ladehilfsmittels wird dieses über die genannten Zentriermittel in die gewünschte mittige Position bezüglich der Rollpalette gebracht. Da die Rollpalette außerdem nicht auf ihren Rollen steht, sondern durch den Auflagestempel großflächig abgestützt wird, kann sie auch durch starke Belastungen beim Laden, etwa durch Räder eines Rollcontainers oder durch eine schnell und schräg abgesenkte Ladeeinheit, kaum beschädigt werden. Der Auflagestempel ist deshalb zweckmäßigerweise so gestaltet, daß die Rollpalette auf jeden Fall unterhalb des Rollbereiches der Räder von Rollcontainern abgestützt wird.

Da die Zentriermittel an dem Auflagestempel angebracht sind, benötigt die Rollpalette im wesentlichen keine eigenen Zentriervorrichtungen. Allerdings kann es bei bestimmten Ladehilfsmitteln, beispielsweise bei Rollcontainern, zusätzlich von Vorteil sein, wenn der Boden der Rollpalette kleine Vertiefungen zur Aufnahme der Räder eines solchen Rollcontainers aufweist, wodurch der Rollcontainer auf der Rollpalette nicht nur zentriert, sondern auch für den Weitertransport in seiner Position gesichert wird.

In einer vorteilhaften Ausgestaltung der erfindungsgemäßen Einrichtung ist weiterhin vorgesehen, daß der Auflagestempel über elastische Puffer auf dem Boden befestigt ist. Dadurch werden Stoßbelastungen, zum Beispiel durch Elektro-Stapler, auf die Rollpalette, das Ladegut und den Hallenboden verringert. Zum Anheben und Absenken des Auflagestempels dient eine Hubvorrichtung, die mit bekannten Antrieben, wie elektrischen, hydraulischen oder pneumatischen Antrieben und mit einem ebenfalls bekannten Getriebe zur Kraftübertragung arbeitet. In einer vorteilhaften Ausgestaltung der Erfindung ist eine Hubvorrichtung mit Exzenterhebern vorgesehen.

Die Zentriermittel für die Rollpalette sind vorzugsweise als Ausnehmungen für einen Tragrahmen der Rollpalette bzw. für deren Rollen ausgeführt, wobei Einführschrägen von Vorteil sind. In weiterer Ausgestaltung sind Zentriermittel in Form von Zentriernocken auf dem Auflagestempel vorgesehen, deren Abstände jeweils der Breite bestimmter genormter Ladehilfsmittel entsprechen. Natürlich könnten solche Zentriernocken auch für die Rollpaletten selbst vorgesehen sein. Wenn die Ladehilfsmittel breiter sind als die Rollpalette, können die nach oben auf dem Auflagestempel vorstehenden Zentriernocken seitlich an der Rollpalette vorbeigreifen und die Ladehilfsmittel, zum Beispiel Europaletten oder Gitterboxen, zentrieren. Sind sie dagegen schmäler als die Rollpalette, so ist eine Anpassung zwischen den Zentriermitteln des Auflagestempels und der Rollpalette erforderlich.

Eine zur Verwendung in einer erfindungsgemäßen Ladeeinrichtung geeignete Rollpalette mit einer Tragplatte zur Aufnahme von Ladehilfsmitteln und mit an der Unterseite der Tragplatte angeordneten Rollen ist so ausgebildet, daß die Tragplatte Ausnehmungen zum Eingriff von Zentriermitteln des Auflagestempels aufweist. Diese Ausnehmungen können als Einschnitte im Randbereich der Tragplatte ausgebildet sein, um die Breite der Tragplatte im Bereich dieser Einschnitte an den Abstand von Zentriernocken des Auflagestempels anzupassen. Sie können aber auch als Durchbrüche in der Tragplatte vorgesehen sein, durch welche die Zentriernocken des Auflagestempels greifen können, um schmälere Ladehilfsmittel auf der Rollplatte zu zentrieren.

Speziell für Rollcontainer oder ähnliche Ladehilfsmittel können auch zusammenwirkende Zentriermittel in der Tragplatte der Rollpalette und an dem Auflagestempel ausgebildet sein. So können beispielsweise Ausnehmungen in der Tragplatte der Rollpalette vorgesehen sein, welche die vorgesehenen Positionen der Räder eines Rollcontainers vorgeben und somit bereits als Zentriermittel, für den Weitertransport aber auch als Arretiermittel für den Rollcontainer dienen. Hierbei ist es möglich, daß zusätzliche Zentrier- oder Auflagenocken des Auflagestempels die Ausnehmungen der Rollpalette teilweise ausfüllen, so daß beim Beladen die Räder des Rollcontainers nur in eine leichte Vertiefung gleiten und dort zentriert werden; beim späteren Anheben der Rollpalette mit den Fördermitteln werden dann die Auflagenocken relativ zu der Auflageplatte nach unten entfernt, so daß die Räder des Rollcontainers tiefer in die Ausnehmungen der Rollpalette sinken und arretiert werden.

Weitere Einzelheiten und Vorteile der Erfindung werden bei der nachfolgenden Beschreibung von Ausführungsbeispielen anhand der Zeichnung näher erläutert. Es zeigen
Figuren 1, 2 und 3 eine erfindungsgemäße Ladeeinrichtung in drei verschiedenen, teils geschnittenen Ansichten, die jeweils nur schematisch die für die Erfindung wesentlichen Teile zeigen,
Figur 4 eine Rollpalette zur Verwendung in einer erfindungsgemäßen Ladeeinrichtung und
Figur 5 einen an die erfindungsgemäße Ladeeinrichtung gemäß Figur 2 anschließenden Abschnitt einer Förderstrecke mit Rollpaletten, die mit unterschiedlichen Ladehilfsmitteln beladen sind.

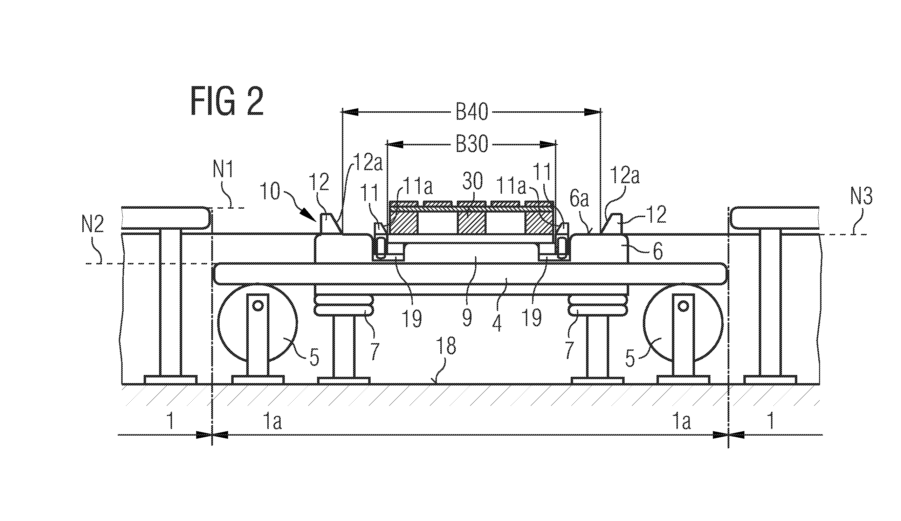

Die erfindungsgemäße Lade- und Entladeeinrichtung ist in eine Förderstrecke 1 mit Kettenförderern 2 integriert, welche an einer Ladestation der Ladeeinrichtung unterbrochen ist. Diese Unterbrechung wird durch einen Förderabschnitt 1a mit einem getrennten Kettenförderer 3 ausgefüllt, dessen zwei Endlos-Förderketten 4 parallel zu beiden Seiten der Förderstrecke laufen. Der Kettenförderer 3 mit seinen Endlosketten 4 kann über Exzenterheber 5 zwischen einer oberen Position, bei der die Endlosketten 4 auf dem gleichen Niveau N1 wie die Kettenförderer 2 der Förderstrecke 1 liegen, und einer unteren Position mit dem Niveau N2 gemäß Darstellung in Figur 2 verfahren werden.

Weiterhin besitzt die Ladeeinrichtung 10 einen Auflagestempel 6, dessen oberseitige Auflagefläche 6a zumindest die Fläche des größten zu verladenden Ladehilfsmittels aufweist oder zumindest stellenweise zu umgreifen vermag. Da der Auflagestempel 6 in dem gezeigten Ausführungsbeispiel in Querrichtung zur Förderrichtung der Förderstrecke 1 über die Breite des Kettenförderers 3 hinausgreift, sind in dem Auflagestempel jeweils nutartige Aussparungen 6a vorgesehen, in denen die Endlos-Förderketten 4 auch bei abgesenktem Kettenförderer 3 verlaufen können.

Der Auflagestempel 6 ist über Gummipuffer 7 derart auf einem festen Untergrund 18 gelagert, daß er mit allen seinen Teilen unterhalb des Niveaus N1 der Förderstrecke 1 liegt. Der Kettenförderer 3 kann also in seiner oberen Position Gegenstände ungehindert über den Auflagestempel 6 hinweg transportieren.

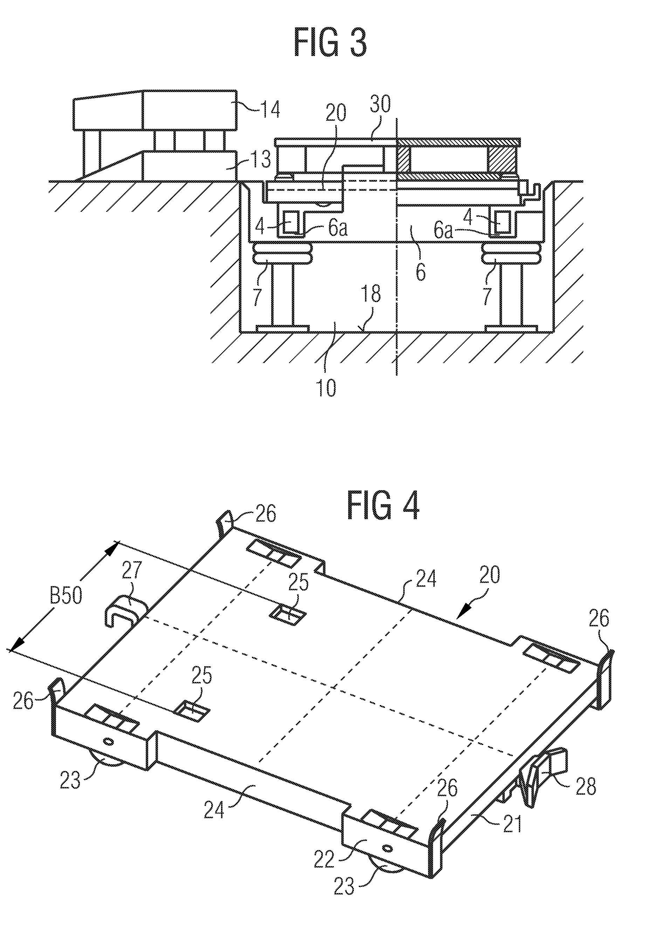

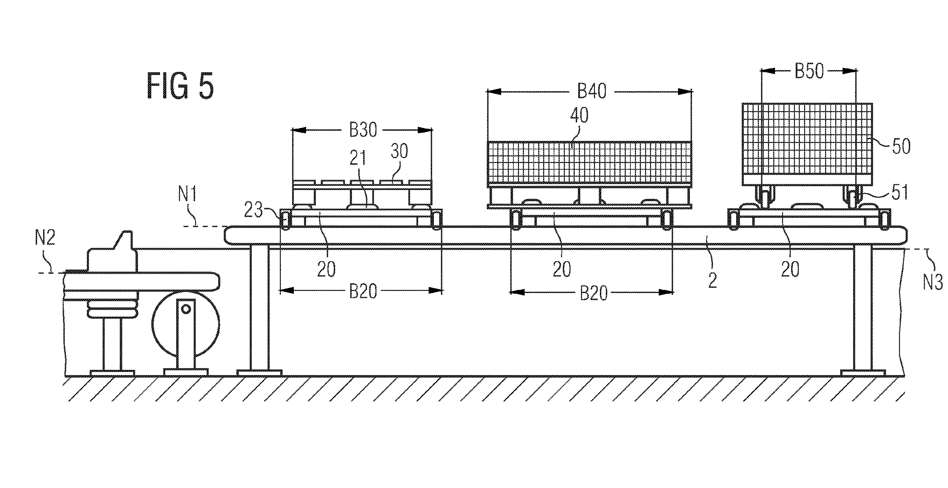

Zur Abstützung und Aufnahme einer Rollpalette 20, wie sie in Figur 4 gezeigt ist, besitzt der Auflagestempel 6 eine zentrische Stützplatte 9 sowie zu beiden Seiten dieser Stützplatte 9 Ausnehmungen 10 für die Aufnahme von Rollen der Rollpalette. Die Höhe der Stützplatte über dem Untergrund 18 ist so gewählt, daß die Oberseite der Rollpalette 20 in einer Ebene mit dem Niveau N3 eines Hallenbodens bzw. einer Fahrbahn liegt. Weiterhin sind auf der Oberseite des Auflagestempels 6 jeweils paarweise Zentriernocken angebracht, nämlich im vorliegenden Beispiel ein Paar von Zentriernocken 11 mit relativ engem Abstand zur Aufnahme einer Europalette und ein Paar von Zentriernocken 12 mit weitem Abstand zur Aufnahme von beispielsweise einer Logistikbox 40, wie sie in Figur 5 gezeigt ist. Die Zentriernocken 11 und 12 sind jeweils konzentrisch zu der Stützplatte 9 und zu den Ausnehmungen 10 des Auflagestempels so angeordnet, daß sie über ihre nach innen geneigten Einführschrägen 11a bzw. 12a das jeweilige Ladehilfsmittel bezüglich des Auflagestempels 6 und einer auf dem Auflagestempel zentrierten Rollpalette 20 zentrieren.

Seitlich von dem Förderabschnitt 3 sind Einführhilfen 13 und 14 jeweils paarweise ebenfalls zentrisch zum Auflagestempel 6 vorgesehen, wobei die Einführhilfen 13 für schmälere Ladehilfsmittel, z.B. die Europalette 30, und die in größerer Höhe angeordneten Einführhilfen 14 für breitere Ladehilfsmittel, z.B. die Gitterbox 40, vorgesehen sind.

Figur 4 zeigt schematisch eine für die erfindungsgemäße Ladeeinrichtung geeignete Rollpalette 20. Sie besteht im wesentlichen aus einer Tragplatte 21 auf einem Tragrahmen 22, welcher in den Viereckbereichen jeweils Rollen 23 trägt. In beiden Längsseitenbereichen sind die Tragplatte 21 und der Tragrahmen 22 mit Einschnitten 24 versehen, um in diesem Bereich die Breite der Rollpalette an die Breite einer Europalette anzupassen und so den Durchgriff der Zentriernocken 11 (Figur 2) neben der Rollpalette 20 auf eine aufzulegende Europalette 30 zu ermöglichen.

Weiterhin besitzt die Rollpalette 20 Zentrierausnehmungen 25, deren seitlicher Abstand an den Abstand der Räder 51 eines Rollcontainers 50 (siehe Fig. 5) angepaßt ist. Sie dienen somit zur Zentrierung und Arretierung eines Rollcontainers 50, wenn dieser auf die Rollpalette 20 geladen wird. An den vorderen und hinteren Enden der Rollpalette 20 können außerdem Begrenzungsbleche 26 vorgesehen sein, die ein Verschieben eines Ladehilfsmittels quer zur Förderrichtung der Förderstrecke 1 verhindern. Schließlich besitzt die Rollpalette 20 in bekannter Weise Kupplungselemente 27 und 28, mit deren Hilfe die Rollpaletten 20 in einem Regallager aneinander gekoppelt werden können, um gemeinsam in einem tiefen Lagerkanal bewegt zu werden.

In Figur 5 ist ein Teil der Förderstrecke 1 in einer Figur 2 entsprechenden Darstellung gezeigt, wobei jeweils Rollpaletten mit unterschiedlichen Ladehilfsmitteln gezeigt sind. So ist auf einer ersten Rollpalette 20 eine Europalette 30 gelagert, welche in ihrer Breite B30 dem Abstand der Zentriernocken 11 entspricht, während die Rollen 23 der Rollpalette über die Breite der Tragplatte 21 hinausreichen. Auf einer zweiten Rollpalette 20 ist eine Logistikbox (Gitterbox) 40 gezeigt, deren Breite B40 wesentlich über die Breite B20 der Rollpalette 20 hinausreicht. Diese Logistikbox 40 kann mit Hilfe der Zentriernocken 12 bezüglich der Rollpalette 20 zentriert werden. Schließlich ist in Figur 5 noch ein Rollcontainer 50 gezeigt, dessen Aufbau schmäler ist als die Rollpalette 20; dieser Rollcontainer 50 kann mit seiner Spurweite B50 in den Ausnehmungen 25 des Rollcontainers 20 zentriert werden.

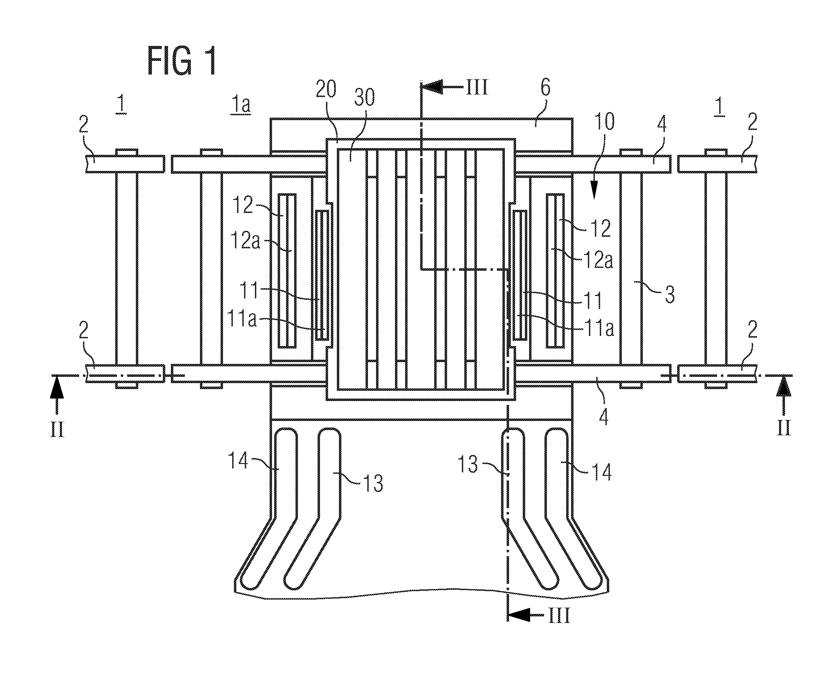

Die Funktionsweise der erfindungsgemäßen Ladeeinrichtung 10 ergibt sich aus dem beschriebenen Aufbau. Anhand der Figuren 1 bis 3 ist beispielshalber die Ladung einer Europalette 30 gezeigt. Dabei wird zunächst eine Rollpalette 20 auf den Förderabschnitt 1a gebracht, und danach wird dieser Förderabschnitt mit seinem Kettenförderer 3 über die Exzenterheber 5 abgesenkt, so daß er die Position gemäß Figur 2 (Niveau N2) einnimmt. Dabei kommt die Rollpalette 20 mit ihrer Tragplatte 21 auf der Stützplatte 9 zur Auflage, während der Tragrahmen 22 und die Rollen 23 in den Ausnehmungen 19 aufgenommen werden. Durch das Einsinken des Tragrahmens 22 in die Ausnehmungen 19 wird die gesamte Rollpalette bezüglich des Auflagestempels 6 zentriert.

Danach wird eine Europalette 30 mit üblichen Handhabungsmitteln, beispielsweise mit einem Handgabelhubwagen zwischen den Einführhilfen 11 auf der Ebene N3 angeliefert und niveaugleich auf die Rollpalette 20 abgesenkt, wobei die Europalette 30 zwischen den Zentriernocken 11 ausgerichtet und bezüglich der Rollpalette 20 zentriert wird. Anschließend wird der Förderabschnitt 1a bzw. der Kettenförderer 3 über die Exzenterheber 5 wieder auf das Niveau N1 der Förderstrecke 1 angehoben, und die Rollpalette 20 kann auf der Förderstrecke 1 weiter transportiert werden.

In gleicher Weise können die anderen Ladehilfsmittel, also die Gitterbox 40 oder der Rollcontainer 50 bei abgesenktem Förderabschnitt 3 auf eine dort wartende Rollpalette 20 aufgelegt und auf dieser zentriert werden.

## Patentansprüche

1. Einrichtung zur Beladung von Rollpaletten mit Ladehilfsmitteln in einer in einer Förderstrecke (1) vorgesehenen Ladestation (1a), die folgende Merkmale aufweist:
- einen mit der Förderstrecke (1) fluchtenden, jedoch von ihr getrennten Förderabschnitt (1a) zur Aufnahme jeweils einer Rollpalette (20), mit Fördermitteln (4), die nur einen Teil der Rollpalette (20) abstützen,
- einen im Bereich des Förderabschnittes (1a) feststehend angeordneten Auflagestempel (6), der eine Abstützung (9) für die Rollpalette (20) zwischen und/oder neben den Fördermitteln (4) auf einem bezüglich der Förderstrecke (1a) niedrigeren Niveau bildet, bei dem die Oberfläche der Rollpalette ein vorgegebenes Ladeniveau (N3) einnimmt, wobei der Auflagestempel (6) zusätzlich Zentriermittel (19) für die Rollpalette (20) und für mindestens ein Ladehilfsmittel (30;40;50) aufweist, und
- eine Hubvorrichtung (5) zur Höhenverstellung der Fördermittel (4) des Förderabschnittes (1a) zwischen dem Niveau (N1) der Förderstrecke (1) und einem Absenkniveau (N2), bei dem die Rollpalette (20) auf der Abstützung (9) des Auflagestempels (6) zur Auflage gelangt.

2. Einrichtung nach Anspruch 1,
**dadurch gekennzeichnet, daß** der Aufnahmestempel (6) auf elastischen Puffern (7) gelagert ist.

3. Einrichtung nach Anspruch 1 oder 2,
**dadurch gekennzeichnet, daß** die Hubvorrichtung Exzenterheber (5) umfaßt.

4. Einrichtung nach einem der Ansprüche 1 bis 3,
**dadurch gekennzeichnet, daß** die Abstützung (9) des Auflagestempels (6) zumindest Auflageflächen unter denjenigen Bereichen der Rollpalette (20) aufweist, welche beim Laden mit Rädern (51) von rollbaren Ladehilfsmitteln (50) und/oder von Hubwagen belastet werden.

5. Einrichtung nach einem der Ansprüche 1 bis 4,
**dadurch gekennzeichnet, daß** die Fördermittel (3) Zugmittel (4) umfassen, welche in nutartigen Aussparungen (6a) des Auflagestempels (6) verlaufen.

6. Einrichtung nach Anspruch 5,
**dadurch gekennzeichnet, daß** die Fördermittel durch einen Kettenförderer )3) gebildet sind.

7. Einrichtung nach einem der Ansprüche 1 bis 6,
**dadurch gekennzeichnet, daß** in dem Auflagestempel (6) Ausnehmungen (19) zur Aufnahme eines Tragrahmens (22) bzw. von Rollen (23) der Rollpalette (20) als Zentriermittel vorgesehen sind.

8. Einrichtung nach einem der Ansprüche 1 bis 7,
**dadurch gekennzeichnet, daß** auf der Oberseite des Auflagestempels über die Ladefläche einer aufliegenden Rollpalette (20) emporragende Zentriernocken (11,12) in einem der Breite eines zu ladenden Ladehilfsmittels (30,40,50) entsprechenden Abstand (B30,B40,B50) voneinander vorgesehen sind.

9. Einrichtung nach Anspruch 8,
**dadurch gekennzeichnet, daß** Zentriernocken ()11,12) für mindestens zwei unterschiedliche Breiten (B30,B40) von Ladehilfsmitteln (30,40) auf dem Auflagestempel (6) vorgesehen sind.

10. Einrichtung nach einem der Ansprüche 1 bis 9,
**dadurch gekennzeichnet, daß** auf dem Auflagestempel (6) Rollenaufnahmen für Rollen (51) eines rollbaren Ladehilfsmittels (50) vorgesehen sind.

11. Einrichtung nach einem der Ansprüche 1 bis 10,
**dadurch gekennzeichnet, daß** der Auflagestempel (6) Vorsprünge aufweist, welche durch Ausnehmungen (25) der Rollpalette (20) ragen und deren Oberseiten mit der Oberseite der Rollpalette (20) in einer Ebene liegen.

12. Rollpalette zur Verwendung in einer Einrichtung gemäß einem der Ansprüche 1 bis 11, mit einer Tragplatte (21) zur Aufnahme von Ladehilfsmitteln (30;40;50) und an der Unterseite der Tragplatte (21) angeordneten Rollen (23),
**dadurch gekennzeichnet, daß** die Tragplatte (21) Ausnehmungen (24;25) für den Eingriff von Zentriermitteln (11) des Auflagestempels (6) aufweist.

13. Rollpalette nach Anspruch 12,
**dadurch gekennzeichnet, daß** die Ausnehmungen als Einschnitte (24) im Randbereich der Tragplatte (21) ausgebildet sind, um die Breite der Tragplatte (21) im Bereich der Einschnitte an den Abstand von Zentriernocken (11) des Auflagestempels (6) anzupassen.

14. Rollpalette nach Anspruch 12,
**dadurch gekennzeichnet, daß** die Ausnehmungen Durchbrüche (25) der Tragplatte (21) sind, deren Abstand (B50) an den Abstand von Zentriermitteln für ein aufzubringendes Ladehilfsmittel (50) angepaßt sind.

15. Rollpalette nach Anspruch 14,
**dadurch gekennzeichnet, daß** als Zentriermittel Rollen (51) eines zu ladenden Rollcontainers (50) dienen, die an den Abstand der Durchbrüche (25) der Tragplatte 821) angepaßt sind.
